# EUROPÄISCHE PATENTSCHRIFT

(11) **EP 0 852 464 B1**
(45) Veröffentlichungstag und Bekanntmachung des Hinweises auf die Patenterteilung: **09.06.1999**
(21) Anmeldenummer: 96932454.0
(22) Anmeldetag: 27.09.1996
(51) Int. Cl.: A22C 17/04

(54) **VERFAHREN UND EINRICHTUNG ZUM AUTOMATISCHEN ENTBEINEN VON FLEISCHTEILEN, INSBESONDERE GEFLÜGELSCHENKELN**
METHOD AND DEVICE FOR AUTOMATICALLY BONING PIECES OF MEAT, IN PARTICULAR POULTRY THIGHS
PROCEDE ET DISPOSITIF DE DESOSSAGE AUTOMATIQUE DE MORCEAUX DE VIANDE, NOTAMMENT DE CUISSES DE VOLAILLES

(30) Priorität: 27.09.1995 DE 19535764
(43) Veröffentlichungstag der Anmeldung: 15.07.1998
(73) Patentinhaber: Maja-Maschinenfabrik Hermann Schill GmbH, D-77694 Kehl-Goldscheuer (DE)
(72) Erfinder: KRAUSE, Georg, D-31139 Hildesheim (DE); KRAUSE, Ulrich, D-31139 Hildesheim (DE)
(74) Vertreter: Schuster, Gregor, Dipl.-Ing.
(86) Internationale Anmeldenummer: DE9601833
(87) Internationale Veröffentlichungsnummer: WO9711609

(56) Entgegenhaltungen:
- EP-A- 0 258 499
- EP-A- 0 447 773
- EP-A- 0 544 094
- WO-A-85/02320
- DE-A- 2 321 242
- DE-U- 9 309 847
- US-A- 2 851 362

## Beschreibung

Die Erfindung geht aus von einem Verfahren zum automatischen Entbeinen von knochenhaltigen Fleischteilen, insbesondere Geflügelschenkeln nach der Gattung des Hauptanspruchs bzw. von einer Einrichtung zur Durchführung des Verfahrens nach dem Oberbegriff des Anspruchs 7

Solche Verfahren und Einrichtungen werden in der fleischverarbeitenden Industrie verwendet um Fleischanteile von Knochen zu lösen. Bei einer bekannten, gattungsgemäßen Einrichtung (DE-G 91 07 606 und DE-G 93 09 847) wird das Fleischteil am Fleisch örtlich fixiert, um dann den Knochen mit einer speziellen Ausstoßstange aus dem Fleischteil zu entfernen. Obwohl diese Einrichtungen insoweit zufriedenstellend arbeiten, gelingt es nicht immer eine saubere Entbeinung vorzunehmen und den Knochen glatt auszustoßen. Immer wieder entstehen Knochenbrüche, wobei Knochensplitter in das Fleisch eindringen und dort hängen bleiben können. Zudem ist der Wirkungsgrad solcher Einrichtungen verhältnismäßig niedrig. Zudem sind diese bekannten Verfahren und Einrichtungen aufgrund des erforderlichen hohen konstruktiven Aufwands teuer und mit entsprechender Reparaturanfälligkeit behaftet.

Das erfindungsgemäße Verfahren mit den kennzeichnenden Merkmalen des Hauptanspruchs sowie die erfindungsgemäße Einrichtung zur Durchführung des Verfahrens mit den kennzeichnenden Merkmalen des Anspruchs 7 haben demgegenüber den Vorteil, daß durch die Verwendung von unter Druckenergie stehender Luft als Trennmittel eine nicht nur sehr saubere Abtrennung des Fleisches vom Knochen erzielt wird, sondern bei einem relativ geringen Maschinenaufwand auch eine sehr zeitsparende Methode gewonnen wird. Während das Fleischteil am Knochen gehalten wird, können durch die Luft hoher Energie die Fleischanteile abgetrennt werden. Gegenüber den bekannten Verfahren ist hier nicht nur eine Voreingenommenheit überwunden worden, sondern es ist auch eine Umkehrung bei der Halterung des Fleischteils gegeben. Das Trennmittel Luft kann nahezu alle Knochenflächen treffen und damit die Fleischanteile vollständig lösen. Es besteht zudem keine Gefahr, daß ein Knochen bricht und Knochensplitter in das Fleisch eindringen. Die Leistungssteigerung für das Entbeinen von Fleischteilen ist gegenüber den bekannten Verfahren und Vorrichtungen durch die Erfindung erheblich gesteigert. So ist das denkbar, daß die Druckenergie sich in Form von Überdruck, Unterdruck oder Strömungsdruck äußert, so daß die Luft über einen Strahldruck, Strömungsdruck oder Saugdruck auf das Fleisch einwirkt. Das vorherige Entfernen der Haut bzw. des Fließes hat den Zweck, mit einer verhältnismäßig geringen Luftenergie auszukommen, um ein befriedigendes Entbeinen zu erzielen.

Nach einer vorteilhaften Ausgestaltung des Verfahrens dient unter Druckenergie stehende Luft zum Weitertransport der abgetrennten Fleischanteile. Das vorhandene Arbeitsmittel Luft, welches als Werkzeug die Abtrennung der Fleischanteile vom Knochen bewirkt, steht ohnehin als Arbeitsmittel für den Transport zur Verfügung. Dies kann sowohl im Schieben durch Überdruck als auch im Ziehen durch Unterdruck erfolgen.

Nach einer weiteren vorteilhaften Ausgestaltung der Erfindung dient der Unterdruck der Luft als Druckenergieform, wobei dieser Unterdruck dazu dienen kann, die Fleischanteile an ein vorhandenes Tragmittel zu saugen, um sie zu einem späteren Zeitpunkt freizugeben oder einfach die Fleischanteile über den Saugtransport und einen Kanal zu einem Behälter zu transportieren, ähnlich wie ein Staubsauger kleinere Teile.

Nach einer weiteren vorteilhaften Ausgestaltung der Erfindung wird diese unter Druckenergie stehende Luft intermittierend gesteuert, so daß sich insbesondere bei der Verwendung von Unterdruck ein solcher immer wieder aufbauen kann, bevor das Fleischteil von der Luft beaufschlagt wird.

Nach einer vorteilhaften Ausgestaltung der Einrichtung der Erfindung dient als Düsenvorrichtung eine Saugöffnung eines Saugkopfes einer Saugvorrichtung der Entbeineinrichtung, wobei diese Saugvorrichtung mit einem Luftdruckerzeuger verbunden ist und wobei das Fleischteil über seinen Knochen gehaltert ist und zum Entbeinen über die Knochenhalterung der Saugenergie der Luft ausgesetzt wird, so daß die Fleischanteile vom Knochen abgetrennt und mittels der Saugenergie wegtransportiert werden.

Nach einer weiteren diesbezüglichen vorteilhaften Ausgestaltung der Erfindung weist der Saugkopf eine Steuereinrichtung auf, über welche die Verbindung zwischen Luftunterdruckerzeuger und Saugöffnung intermittierend zu- und abschaltbar ist. Natürlich könnte die Steuereinrichtung auch anders gestaltet sein, maßgebend ist, daß bei der intermittierenden Steuerung immer dann die unter Druckenergie stehende Luft zur Verfügung steht, wenn das Fleischteil an der Saugöffnung vorbeigeführt oder zu ihr hingeführt wird bzw. wenn die Entbeineinrichtung zum Fleischteil hingeführt wird. So ist es durchaus denkbar, daß die Fleischteile in gewissen Abständen nebeneinander gelagert sind und die Entbeineinrichtung bzw. Einzelvorrichtungen derselben zu dem Fleischteil hingefahren werden.

Nach einer weiteren diesbezüglichen vorteilhaften Ausgestaltung der Erfindung dient als Steuereinrichtung eine Schiebersteuerung, bei der die Saugöffnung in der Mantelfläche eines als Drehschieber ausgebildeten muffenförmigen Außenmantels angeordnet ist und in deren nicht mitdrehenden Innenteil eine mit der Saugöffnung korrespondierende Innenöffnung vorhanden ist, welche zu einer mit dem Luftunterdruckerzeuger verbundenen Innenbohrung des Innenteils führt. Durch die Synchronsteuerung zwischen Drehbewegung des Steuerschiebers und Zuführung des Fleischteils, entsteht ein optimierter Arbeitsvorgang mit einem kontinuierlichem Arbeitsablauf mit entsprechend hoher Leistung.

Nach einer weiteren vorteilhaften Ausgestaltung der Erfindung dient als Transporteinrichtung eine Unendlichförderkette, an der die Fleischteile durch Aufnehmer befestigbar sind.

Nach einer weiteren vorteilhaften Ausgestaltung der Erfindung dienen als Aufnehmer pendelnd an der Unendlichkette gelagerte Haken odgl.

Nach einer weiteren vorteilhaften Ausgestaltung der Erfindung dient als Vorrichtung zur Führung der Fleischteile in eine für das Entbeinen arbeitsgerechte Lage ein Führungsblech, durch welches im Verlauf des Transportes die Fleischteile aus einer der unter Druckenergie stehenden Luft der Entbeinvorrichtung erfaßt werden. Durch die Verwendung von Luft als Trennmittel, kann auch die Führung der Fleischteile mit verhältnismäßig großen Toleranzen ausgestattet sein. Was sich sowohl auf die Kosten der Anlage als auch der Unterhaltung derselben günstig auswirkt.

Nach einer weiteren vorteilhaften Ausgestaltung der Erfindung ist im Randbereich der Saugöffnung ein in Richtung Fleischteil herausragendes Messer angeordnet. Durch dieses Messer werden Sehnen udgl. mit denen die Fleischanteile mit den Knochen verbunden sind abgetrennt, um so das Lösen der Fleischanteile zu vereinfachen.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstandes der Erfindung ist in der Zeichnung dargestellt und im folgenden näher beschrieben.
Es zeigen:
- Fig. 1: eine vereinfachte Ansicht einer Einrichtung zum Entbeinen von Puten, Putenkeulen, odgl. und
- Fig. 2: eine perspektivische Explosionsdarstellung eines Saugkopfes.

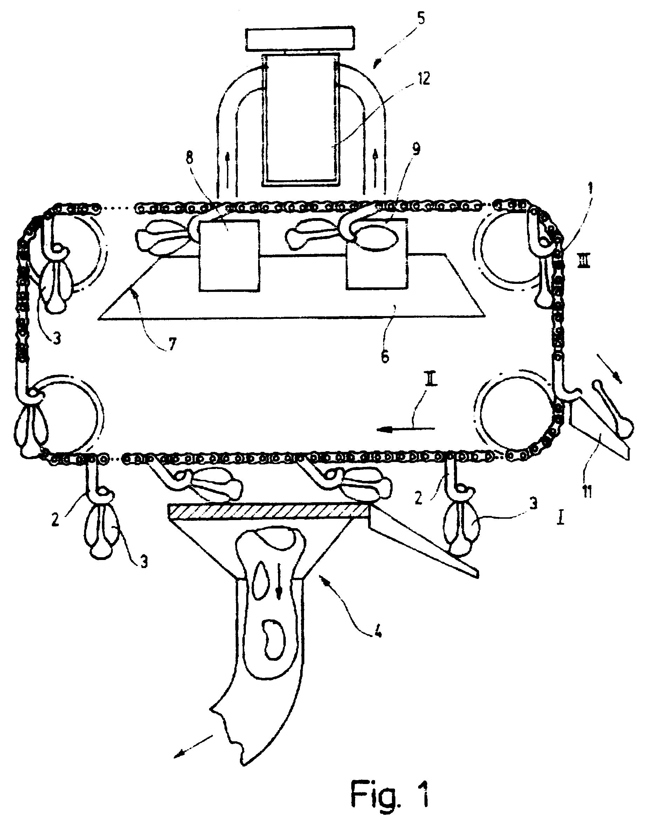

Die erfindungsgemäße Einrichtung gemäß der Darstellung in Fig. 1 weist ein umlaufendes Ketten-Fördersystem mit einer Förderkette 1 auf, an welcher mit Abstand voneinander Aufnehmer 2 pendelnd gelagert sind. Im Bereich I der Einrichtung wird ein Puten-Oberflügel bzw. eine Putenkeule 3 an den Aufnehmer 2 eingehängt. Die Förderkette 1 bewegt sich in Richtung des Pfeiles II, so daß die Putenkeule 3 mit dem pendelnd gelagerten Aufnehmer 2 zu einer Vorrichtung 4 gelangt, die dazu dient, die Putenkeule 3 zu enthäuten. - Anschließend wird die enthäutete Putenkeule 2, die dann nur noch aus Fleisch und Knochen besteht, zu einer Saugvorrichtung 5 geleitet.

Vor und unter der Saugvorrichtung ist in Transportrichtung II der Förderkette 1 ein Führungsblech 6 angeordnet, welches eine Schräge 7 besitzt, durch die gemäß der Darstellung in Fig. 1 erreicht wird, daß die zuvor senkrecht hängenden Putenkeulen 3 unter der Saugvorrichtung 5 eine in etwa waagerechte Lage einnehmen. In dieser Lage gelangen die Putenkeulen 3 zunächst zu einem ersten Saugkopf 8 und anschließend zu einem zweiten Saugkopf 9 der Saugvorrichtung 5. Durch die beiden Saugköpfe wird das Fleisch vollständig vom Knochen entfernt, der an dem Aufnehmer 2 aufgehängt bleibt und anschließend bei 4 im Bereich III der Einrichtung automatisch von dem Aufnehmer 2 entfernt und über eine Rutsche 11 odgl. ausgeworfen wird.

Die Saugvorrichtung 5 weist eine nicht näher dargestellte Vakuumpumpe auf, einen ersten und zweiten Saugkopf 8, 9 sowie einen Sammelbehälter 12 zur Aufnehme des abgesaugten Fleisches. Der erste Saugkopf soll das Fleisch von der einen vorderen Seite der Putenkeule 3 absaugen, und Fleisch der hinteren Seite der Putenkeule 3 wird vom zweiten Saugkopf 9 vom Knochen entfernt. Es ist allerdings auch möglich, mit nur einem einzigen Saugkopf das gesamte Fleisch von dem Knochen zu entfernen und abzusaugen. Bei manchen Fleischkeulen befindet sich nämlich das Fleisch im wesentlichen nur auf einer Seite des Knochens.

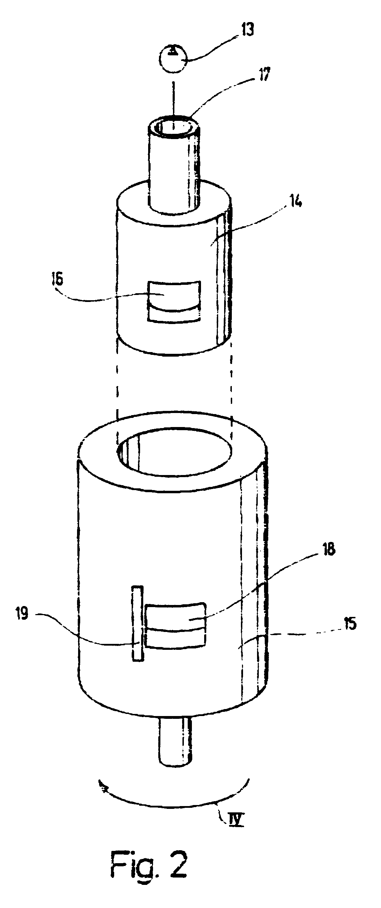

In Fig. 2 ist der erfindungsgemäße Saugkopf in Explosionsdarstellung gezeigt, mit einem stationären und mit einer nur symbolisch angedeuteten Vakuumpumpe 13 verbundenen Innenteil 14 sowie einem in Drehrichtung des Pfeiles IV angetriebenen ebenfalls zylindrischen Außenmantel 15. Im Betriebszustand befindet sich das stationäre Innenteil 14 innerhalb des Außenmantels 15.

Das stationäre Innenteil 14 besitzt in seiner Wandlung eine Innenöffnung 16, die über eine zentrale Innenbohrung mit der Vakuumpumpe 13 in Verbindung steht. Der Außenmantel 15 weist eine mit der Innenöffnung 16 korrespondierende Saugöffnung 18 auf. Die Größe der Innenöffnung 16 ist nahezu identisch, so daß sie miteinander fluchten, wenn der Außenmantel 15 in Folge seiner Drehung in Richtung des Pfeiles IV die entsprechende Position in Bezug auf die Innenöffnung 16 des stationären Innenteils 14 erreicht hat. In dem Zeitabschnitt der Drehbewegung vom Außenmantel 15, in welchem die Innenöffnung 16 und die Saugöffnung 18 nicht miteinander fluchten und entsprechend die Innenöffnung 16 dicht verschlossen ist, wird mittels der Vakuumpumpe 13 ein extrem großer Unterdruck in der Innenöffnung 16 und der Innenbohrung 17 aufgebaut. Der Verdrehantrieb des Außenmantels 15 ist synchron mit dem Antrieb der Förderkette 1 aus Fig. 1 gesteuert, so daß gewährleistet ist, daß sich die Putenkeule 3 vor der Saugöffnung 18 mit der Innenöffnung 16 in Überdeckung gelangt, so daß an der Saugöffnung extrem große Saugkräfte und eine entsprechend große Luftströmung entsteht, die das Fleisch vom Knochen abreißt.

An der einen Seite der Saugöffnung 18 ist zudem ein Messer 19 angeordnet, durch welches das Fleisch der Putenkeule 3 während der Drehung des Außenmantels 15 eingeschnitten wird, wodurch das Absaugen des Fleisches in den Sammelbehälter erleichtert wird.

Beim Weiterdrehen des Außenmantels 15 in Drehrichtung IV wird, nachdem das Fleisch abgesaugt worden ist, die Innenöffnung 16 von der Saugöffnung 18 getrennt, so daß sich wiederum ein neues großes Vakuum aufbauen kann.

Bei einer anderen nicht dargestellten Ausführungsform ist die Möglichkeit gegeben, innen an der Saugöffnung ein luftdurchlässiges Gitter vorzusehen. Wenn dann die Innenöffnung und die Saugöffnung miteinander fluchten und die großen Saugkräfte wirksam werden, bleibt das Fleischstück im Bereich der Saugöffnung am Außenmantel bzw. am Gitter wegen der auftretenden Saugkraft haften. Bei weiterer Drehung des Außenmantels, wenn die Innenöffnung und die Saugöffnung nicht mehr fluchten und die Saugkraft nicht mehr vorhanden ist, kann das Fleischstück dann abgestreift werden. Gegebenenfalls fällt es auch von selbst aufgrund seiner Schwerkraft herunter.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Förderkette
- 2: Aufnehmer
- 3: Putenoberflügel
Putenkeule
- 4: Enthäutungsvorrichtung
- 5: Saugvorrichtung
- 6: Führungsblech
- 7: Schräge
- 8: erster Saugkopf
- 9: zweiter Saugkopf
- 10: zweiter Saugkopf
- 11: Rutsche
- 12: Sammelbehälter
- 13: Vakuumpumpe
- 14: Innenteil
- 15: Außenmantel
- 16: Innenöffnung
- 17: Innenbohrung
- 18: Saugöffnung
- 19: Messer
- I: Bereich
- II: Bewegungsrichtung
- III: Bereich
- IV: Drehrichtung von 15

## Patentansprüche

1. Verfahren zum automatischen Entbeinen von knochenhaltigen Fleischteilen, insbesondere Geflügelschenkeln, gekennzeichnet durch folgende Verfahrensschritte:
- Transportieren und/oder Zueinanderführen des noch nicht entbeinten Fleischteils und einer Entfließ- bzw. Enthäutungsmaschine;
- Enthäuten des Fleischteils und Entsorgen der Häute;
- Weitertransportieren und/oder Zueinanderführen des noch nicht entbeinten Fleischteils zum Entbeinen;
- Haltern des Knochens des Fleischteils und Richten des Fleischteils in eine entbeingerechte Lage;
- Beaufschlagen des Fleisches mit unter Druckenergie (Überdruck, Unterdruck, Strömungsdruck) stehender Luft als Trennmittel;
- Sammeln und Weitertransportieren der abgetrennten Fleischanteile und
- Weitertransportieren und/oder Entsorgen der Knochen (Beinanteile).

2. Verfahren nach Anspruch 1, dadurch gekennzeichnet, daß zum Weitertransport der abgetrennten Fleischanteile unter Druckenergie stehende Luft dient.

3. Verfahren nach Anspruch 1 oder 2, dadurch gekennzeichnet, daß als Druckenergieform der Luft, deren Unterdruck dient.

4. Verfahren nach einem der vorhergehenden Ansprüche, dadurch gekennzeichnet, daß die unter Druckenergie stehende Luft entsprechend der pro Zeiteinheit zu entbeinenden Fleischteile intermittiert gesteuert wird.

5. Verfahren nach Anspruch 3 oder 4, dadurch gekennzeichnet, daß der Transport der Fleischanteile in Art eines vorübergehend wirksamen Saughebers erfolgt.

6. Verfahren nach Anspruch 3 oder 4, dadurch gekennzeichnet, daß der Transport der Fleischanteile in Art eines Strömungstransports (Staubsauger) erfolgt.

7. Einrichtung zur Durchführung des Verfahrens nach einem der Ansprüche 1 bis 6.
- mit einer Transporteinrichtung (1) für knochenhaltige Fleischteile, wie Geflügelkeulen (3) odgl.,
- mit einer Vorrichtung (2), (6), (7) zur Halterung und Führung der Fleischteile (3) in eine für das Entbeinen arbeitsgerechte Lage und
- mit einer Entbeinvorrichtung (5), welche Mittel aufweist, um das Fleisch vom Knochen zu trennen,
dadurch gekennzeichnet,
- daß für die Entbeinvorrichtung (5) eine Luftdruckenergie erzeugende oder vermittelnde Maschine (13) vorhanden ist;
- daß die Entbeinvorrichtung (5) eine die unter Druckenergie stehende Luft steuernde Düseneinrichtung (8), (9) aufweist; so
- daß die als Trennmittel dienende Luft das Fleischteil (3) beaufschlagt und vom Knochen trennt.

8. Einrichtung nach Anspruch 7, dadurch gekennzeichnet,
- daß als Düsenvorrichtung eine Saugöffnung (18) eines Saugkopfes (8), (9) einer Saugvorrichtung (5) der Entbeineinrichtung dient;
- daß diese Saugvorrichtung (5) mit einem Luftunterdruckerzeuger (13) verbunden ist;
- daß das Fleischteil (3) über seinen Knochen gehaltert ist und
- daß zum Entbeinen das Fleischteil (3) über die Knochenhalterung (2) der Saugenergie der Luft ausgesetzt wird, so
- daß die Fleischanteile vom Knochen abgetrennt und mittels der Saugenergie wegtransportiert werden.

9. Einrichtung nach Anspruch 8, dadurch gekennzeichnet, daß der Saugkopf (8), (9) eine Steuereinrichtung (14), (15) aufweist, über welche die Verbindung zwischen Luftunterdruckerzeuger (13) und Saugöffnung (18) intermittierend zu- und abschaltbar ist.

10. Einrichtung nach Anspruch 9, dadurch gekennzeichnet, daß als Steuereinrichtung eine Schiebersteuerung (14), (18) dient, bei der die Saugöffnung (18) in der Mantelfläche eines als Drehschieber ausgebildeten muffenförmigen Außenmantels (15) angeordnet ist und in deren nicht mitdrehenden Innenteil (14) eine mit der Saugöffnung (18) korrespondierende Innenöffnung (16) vorhanden ist, welche zur einer mit dem Luftunterdruckerzeuger verbundenen Innenbohrung (17) des Innenteils (14) führt.

11. Einrichtung nach einem der Ansprüche 7 bis 10, dadurch gekennzeichnet, daß als Transporteinrichtung eine Unendlichförderkette (1) dient, an der die Fleischteile (3) durch Aufnehmer (2) befestigbar sind.

12. Einrichtung nach Anspruch 11, dadurch gekennzeichnet, daß als Aufnehmer (2) pendelnd an der Unendlichkette (1) gelagerte Haken (2) odgl. dienen.

13. Einrichtung nach einem der Ansprüche 7 bis 12, dadurch gekennzeichnet, daß als Vorrichtung zur Führung der Fleischteile (3) in eine für das Entbeinen arbeitsgerechte Lage ein Führungsblech (6), (7) dient, durch welches im Verlauf des Transportes die Fleischteile (3) aus einer Vertikallage in eine Horizontallage gelangen, bevor sie von der unter Druckenergie stehenden Luft der Entbeinvorrichtung (5) erfaßt werden.

14. Einrichtung nach einem der Ansprüche 8 bis 13, dadurch gekennzeichnet, daß im Randbereich der Saugöffnung (18) ein in Richtung Fleischteil (3) herausragendes Messer (19) angeordnet ist.

## Claims

1. Method and device for automatically boning pieces of meat, in particular poultry thighs, distinguished by the following steps of procedure:
- Transporting and/or feeding the not yet boned piece of meat and an emanater resp. skinning machine;
- skinning of piece of meat and removing of the skins;
- further transporting and/or feeding of not yet boned pieces of meat for boning;
- holding the bone of piece of meat and bringing the piece of meat in a righteous position for boning;
- admission of the meat with the air standing under pressure-energy (overpressure, underpressure, flow pressure) as a separating method;
- collecting and transporting of separated meat portions and
- transporting and/or removal of bones (parts of legs).

2. Method according Title 1, designated so far as the air underpressure energy serves for transporting the separated pieces of meat,

3. Method according Title 1 or 2, designated so far as the form of pressure-energy of the air serves it under pressure.

4. Method according to one of the preceding Titles, designated as far as the air standing under pressure-energy be controlled intermittingly corresponding to the pieces of meat to be boned per unit time.

5. Method according to Title 3 or 4, designated as far as the transport of the pieces of meat is made in the kind of a temporary efficatious siphon.

6. Method according to Title 3 or 4, designated as far as the transport of the pieces of meat take place in form of a flow transportation (vacuum cleaner).

7. Device for performance of the method acc. One of the Titles 1-6,
- with a transport device (1) for bony pieces of meat like poultry thighs (3) or similar.,
- with a device (2), (6), (7) for holding and guiding the pieces of meat (3) in a position for boning meeting the working demands, and
- with a boning device (5), showing the means to separating the meat from the bone,
designated as far as,
- for the boning device (5) a machine (13) is available settling the air pressure energy;
- the boning device (5) shows the nozzle appliance 88), (9); controlling the air under pressure-energy so
- that the air serving as separating-method admets the piece of meat (3) and separates it from the bone.

8. Device according Title 7, designated as far as,
- a suction port (18) of a pipe (8), (9) of a suction device (5) serves the suction device as nozzle appliance;
- this suction device (5) is combined with an air depression manufacturer (13);
- the piece of meat (3) be held over its bones, and
- for boning the piece of meat (3) be exposed to the air over the bone holder (2) of the suction energy, so
- that the pieces of meat be separated from the bone and transported by the means of the suction energy.

9. Device acc. Title 8, designated as far as the pipe (8), (9) shows a controller (14, (15), enabling to connect and disconnect intermitting between air depression manufacturer (13) and suction port (18).

10. Device acc. Title 9, designated as far as a slide valve gear (14), (18) serves as controller, of which the suction port (18) in the superficies of a sleeve-shaped outer liner (15) adjusted as a rotary slide, in whose non-rotating center part (14) is adjusted an inner port (16) corresponding with the suction port (18), leading to a center borehole (17) of the center part (14) connected with the air depression manufacturer.

11. Device acc. One of the Titles 7-10, designated as far as an infinite conveying chain (1) serves as transportation device to which the pieces of meat (3) are fixed by the scoop with fastening possibilities (2).

12. Device acc. Title 11, designated as far as hooks or similar (2), swinging on the infinite conveying chain (1), serve as scoop (2).

13. Device acc. One of the Titles 7-12, designated as far as a guide pate (6), (7) serves as a device for leading the pieces of meat (3) into a position to enable the boning (7), by which in the current of the transportation the pieces of meat (3) arrive from a vertical position to a horizontal before beeing seized from the air of the boning device (5)under pressure-energy.

14. Device according to one of the Titles 8-13, designated as far as a knife (19) is adjusted in the peripheral zone of the suction port (18) produing in direction of the piece of meat (3).

## Revendications

1. Procédé pour le desossage automatique de morceaux de viande, notamment de cuisses de volailles, caractérisé des mesures suivants:
- Transporter et/ou assembler des morceaux de viande pas encore désossés et d'un émanateur- respectivement. machine à dépouiller;
- dépouillier le morceau de viande et remettre des peaux;
- transporter et/ou assembler le morceau de viande pas encore désosé pour être désossé;
- manche pour l'os du morceau de viande et mettre le morceau de viande dans une positioin juste pour désosser;
- admettre la viande avec énérgie de l'air sous pression (surpression, dépression, pression d'écoulement) comme agent de séparation;
- ramasser et transporter des morceaux de viande séparés et
- emmenant et/ou remettre les os (morceaux de jambes).

2. Procédé selon Titre 1, caractérisé du fait que l'air sous énérgie à pression serve au transport des morceaux de viande séparés.

3. Procédé selon Titre 1 ou 2, caractérisé du fait que la dépression serve la methode énérgetique aéro.

4. Procédé selon l'un des Titres précédants, caractérisé du fait que l'air sous énérgie à pression soit contrôlé intermittent selon les morceaux de viande à séparer per unité de temps.

5. Procédé selon Tire 3 ou 4, caratérisé du fait que le tansport des morceaux de viande soit effectué temporairement de la manière d'un siphon.

6. Procédé selon Titre 3 ou 4, caractérisé du fait que le transport des morceaux de viande soit effectué par mesure de tansport courant (aspirateur).

7. Dispositif pour effectuer le procédé selon l'un des Titres 1 à 6,
- avec un dispositif de transport (1) pour morceaux de viande osseux, comme cuisses de volailles (3) ou similaire;
- avec un dispositif (2), (6), (7) pour tenir et guider les morceaux de viande (3) dans une position juste pour desosser et
- avec un dispositif des desossage (5), contenant des moyens pour séparer la viande de l'os,
cractérisé du fait que,
- pour le dispositif de désossage (5) une machine (13), produisante ou servant de l'énérgie à air pression soit présente;
- le dispositif de désossage (5) présente une tuyère (8), (9), contrôlant l'air sous pression; de manière
- que l'air servant comme moyen de séparation coupe le morceau de viande (3) en le séparant de l'os.

8. Dispositif selon Titre 7, caractérisé du fait
- comme tuyère serve un port (18) de la crépine (8), (9) d'un aspirateur (5) pour la direction du désossage;
- que ce dispositif d'aspiration (5) soit combiné avec un générateur à dépression d'air (13);
- que le morceau de viande (3) soit tenu au-dessus de ses os et
- que le morceau de viande (3) soit exposé sur la manche des os (2) à l'énérgie aspiratif d'air pour être désossé, du fait
- que les morceaux de viande soit séparés de l'os et transmis par moyen d'énérgie aspiration.

9. Dispositif selon Titre 8, caractérisé du fait que la crépine (8), (9) présente une électrode de commande (14, (15), sur laquelle la connection entre générateur à dépression d'air (13) et ouverture de l'aspirateur (18) soit connectable et débranchable intermittent.

10. Dispositif selon Titre 9, caractérisé du fait qu'un distributeur par tiroir (14) (18) serve comme éléctrode de commande, dont l'ouie d'aspiration (18) soit arrangée dans la surface du manchon extérieurcomme tiroir rotatif (15). Dans son centre part (14) pas rotatif il y a une ouverture centrale (16) en accord avec l'ouile d'aspiration (18), mênant à un perforage intérieure (17), lié avec le générateur de dépression d'air du centre part (14).

11. Dispositif selon un des Titre 7 à 10, caractérisé du fait qu' une chaîne transporteuse dans l'infini (1) serve le dispositif du transport,dès les morceaux de viande (3) peuvent être (2).attachés avec récepteur.

12. Dispositif selon Titre 11, caractérisé du fait que des crochets (2) ou similaire servent de récepteur (2) basculant à la chaîne dans l'infini (1).

13. Dispositif selon un des Titres 7 à 12, caractérisé du fait qu'un guide-tôle (6), (7) serve au dispositif à guider les morceaux de viande (3) dans une position juste pour le désossage. Dans le courant du transport, les morceaux de viande (3) arrive par moyen du guide-tôle d'une position verticale dans une position horizontale, avant d'être positionnés par énérie-pression du dispositif de désossage (5).

14. Dispositif selon un des Titres 8 à 13, caractérisé du fait que dans la zone du bord de l'ouverture de l'aspirateur (18) un coûteau débordant (19) soit ajusté en direction du morceau de viande (3).
